# EUROPEAN PATENT APPLICATION

(11) **EP 2 311 308 A1**
(43) Date of publication of application: **20.04.2011**
(21) Application number: 09845655.1
(22) Date of filing: 29.12.2009
(51) Int. Cl.: A01D 69/08, F16D 13/08

(54) **OUTPUT SHAFT CLUTCH DEVICE FOR GEARBOX OF LAWN MOWER**

(30) Priority: 24.07.2009 CN 200910181628
(71) Applicant: Jiangsu World Plant-protecting Machinery Co., Ltd, Jiangsu 212300 (CN)
(72) Inventor: WANG, Ting, Danyang Jiangsu 212300 (CN); ZHANG, Chaojie, Danyang Jiangsu 212300 (CN); WANG, Qiang, Danyang Jiangsu 212300 (CN)
(74) Representative: ABG Patentes, S.L.
(86) International application number: PCT/CN2009/076174
(87) International publication number: WO 2011/009276

(57) **Abstract**

The present invention discloses a clutch for gearbox output shaft of lawn mower, comprising gasket, worm wheel, shaft sleeve I, torsional spring and shaft sleeve II are arranged an output shaft in turn. The torsional spring is arranged inside a sliding sleeve and its two ends are arranged on shaft sleeve I and shaft sleeve II; a rib-type spiral wedge is arranged at the inner hole of the sliding sleeve, and the straight claw and curved claw at the two ends of the torsional spring respectively rest against the axial plane on the one side of the spiral wedge at the inner hole of the sliding sleeve and the helicoid on the other side; the worm engages the worm wheel, the shaft sleeve I is radially fixed connected with the worm wheel, the shaft sleeve II is fixed connected with the output shaft via a spring pin, the clutch release shaft is vertically arranged along the shaft sleeve II, and its upper end runs out of the upside of the box and then is fixed connected with the clutch swing arm; the two ends of the tension spring are respectively hook jointed to the upside of the box and one end of the clutch swing arm, and the other end of the clutch swing arm is hinged to a clutch operational mechanism. The present invention has compact structure and small radial dimension; the sliding sleeve adopts an integral structure, which facilitates processing, assembly and repair and results in low manufacture cost.

## Description

### Field of the Invention

The present invention relates to a clutch device for gearbox output shaft, and particularly to a clutch device for controlling self-propelling or stopping of a small self-propelled lawn mower, and it belongs to the technical field of garden machines.

### Background of the Invention

With the improvement of living standard and the requirement of landscaping, the usable area of lawn increases rapidly, and the work of lawn maintenance has been doubled in municipal affairs, residence communities, football pitches, golf courses and etc. Lawn mowers, as greening maintenance facilities, play an important role in the work of lawn maintenance. The power of the motor of a present small self-propelled lawn mower is transmitted to gearbox via driving belts, the self-propelling or stopping of the mower is realized through the engagement or disengagement of the clutch device in the gearbox, and the quality of the structure of the clutch device decides the service life of the gearbox. Currently, the clutch device of the lawn mower gearbox adopts the structure form of matching conical sleeve with copper gear. The functions of the clutch device are realized by friction drive when the conical hole of the conical sleeve is engaged with the conical head of the copper gear, or by their disengagement. As the clutch device is frequently engaged and disengaged, when the conical hole surface of the conical sleeve and the conical periphery surface of the copper gear are engaged or disengaged, the relative slip of the junction surface is very large and the junction surface is prone of wear, so the clutch may become invalid after a short time of use, thus the gearbox can't output power or realize drive, and the lawn mower can't realize self-propelling.

Chinese invention patent No. 92100193.2 discloses a "clutch mechanism for frictional connection between an external component and a shaft". This clutch mechanism comprises a sleeve arranged on a shaft. On the sleeve, there is a periphery surface designed into helicoid. The sleeve is connected at one end to an external component to be fixed on the shaft. A clamping ring is disposed on the sleeve, too. The inner perimeter surface of the clamping ring is designed into a helicoid. When the clamping ring is rotated relative to the sleeve, the sleeve will be radially compressed and clamped onto the shaft, realizing frictional connection between the clamping ring and the shaft. This invention has the advantages of small axial dimensions, a small number of parts, compact structure and long service life. However, the radial dimension of the clamping ring of this invention is large and not suitable for the structure with small dimension. Moreover, the engagement or disengagement of this clutch mechanism are realized through rotating the clamping ring, so it can't be used in the devices that can't realize the engagement and disengagement of the clutch mechanism through rotation.

### Summary of the Invention

The purpose of the present invention is to provide a clutch device for gearbox output shaft of lawn mower, which is characterized by compact structure, easy and labor-saving operation and long service life.

The present invention is realized through the following technical scheme:
A clutch device for gearbox output shaft of lawn mower comprises output shaft, gasket, worm, worm wheel, clutch release shaft, tension spring, clutch swing arm, sliding sleeve, shaft sleeve I , torsional spring, shaft sleeve II and spring pin; said gasket, worm wheel, shaft sleeve I, torsional spring and shaft sleeve II are arranged on the output shaft in turn, said torsional spring is arranged inside the sliding sleeve and its two ends are respectively arranged on the shaft sleeve I and the shaft sleeve II. Said worm is engaged with the worm wheel. Said shaft sleeve I is radially fixed connected with the worm wheel. Said shaft sleeve II is fixed connected with the output shaft through a spring pin. Said clutch release shaft is vertically disposed along the shaft sleeve II, its radially extending shifting fork rests against one end of the shaft sleeve II, and its upper end runs out of the upside of the box and then is fixed connected with the clutch swing arm. The two ends of the tension spring are respectively hook jointed with the upside of the box and one end of the clutch swing arm, and the other end of the clutch swing arm is hinged to a clutch operational mechanism.

The purpose of the present invention may be further realized through the following technical measures.

The foregoing clutch for gearbox output shaft of lawn mower, wherein a rib-type spiral wedge is arranged at the inner hole of the sliding sleeve, one side of the spiral wedge is an axial plane, the other side is a helicoid, and the lead angle of the rib-type spiral wedge is 40°∼55°.

The foregoing clutch for gearbox output shaft of lawn mower, wherein a straight claw and a curved claw are respectively arranged at the two ends of the torsional spring, the straight claw rests against the axial plane on one side of the spiral wedge at the inner hole of the sliding sleeve, and the curved claw rests against the helicoid on the other side.

The foregoing clutch for gearbox output shaft of lawn mower, wherein the shaft sleeve I and the shaft sleeve II adopt a structure of stepped shaft sleeve, and the two ends of the torsional spring are respectively arranged on the two opposite ends of the shaft sleeve I and the shaft sleeve II.

The present invention is characterized in compact structure, labor-saving operation and long service life. It fundamentally overcomes the disadvantage of the present clutch for gearbox output shaft of lawn mower: when the conical hole of the conical sleeve and conical head of copper gear are integrally engaged or disengaged, relative sliding friction of their junction surface will be very large, and the junction surface will be worn after a short time of use and the clutch will become invalid. The present invention cleverly adopts a sliding sleeve and a torsional spring as the parts for frictional connection between the gearbox output shaft and the power input worm wheel. Under the pull of the tension spring on the gearbox, the sliding sleeve moves towards the worm wheel, the angle between the curved claw and straight claw at the two ends of the torsion spring is increased under the radial push of the rib-type spiral wedge at the inner hole to the curved claw at one end of the torsional spring, the torsional spring is disengaged from the shaft sleeve I and the shaft sleeve II, thus the output shaft is disengaged from the worm wheel drive, and the lawn mower maintains the state of stop of self-propelling. On the contrary, under the action of an external force, the sliding sleeve moves away from the worm wheel, and under the elastic force of the torsional spring itself, the angle between the curved claw and straight claw at the two ends of the torsional spring will become smaller and its inner diameter will become smaller, too. As a result, the shaft sleeve I and the shaft sleeve II are clasped, the torsion of the worm wheel is transferred to the output shaft via the shaft sleeve I, the sliding sleeve, the torsional spring and the shaft sleeve II, the output shaft and the worm wheel are engaged and the lawn mower are self-propelled. The present invention has a compact structure and small radial dimensions; the sliding sleeve adopts an integral structure, which facilitates processing, assembly and repair, and results in low manufacturing cost; the curved claw and straight claw at two ends of the torsional spring in the present invention have small contact area with the rib-type spiral wedge at the inner hole of the sliding sleeve, and the curved claw and straight claw are both quenched and have high hardness and long service life. As a result, the reliability of the present invention is enhanced.

The advantages and features of the present invention will be illustrated and explained through the unrestrictive descriptions of the following preferred embodiments. These embodiments are provided as examples referring to the drawings only.

### Brief Description of the Drawings

Fig. 1 is a front view of the present invention;
Fig. 2 is a top view of Fig. 1;
Fig. 3 is a perspective exploded view of the present invention;
Fig. 4 is a perspective view of Fig. 3 in direction A;
Fig. 5 is a B-B section view of Fig. 1, wherein the present invention is in an engaged state;
Fig. 6 is a B-B section view of Fig. 1, wherein The present invention is in a disengaged state;
Fig. 7 is a perspective exploded assembly view of the sliding sleeve and torsional spring of the present invention.

### Detailed Description of the Embodiments

Below the present invention is further described referring to the drawings and embodiments.

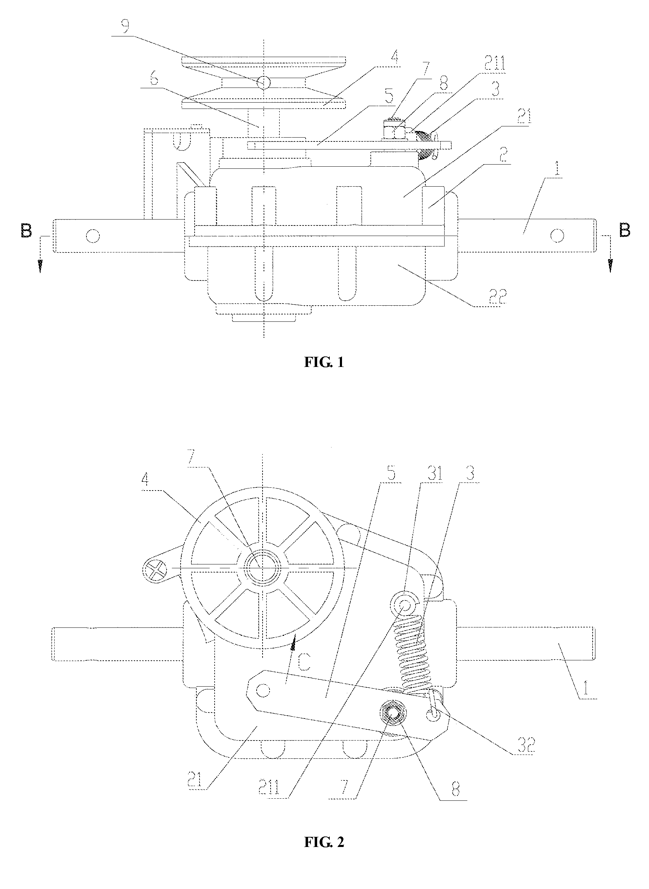

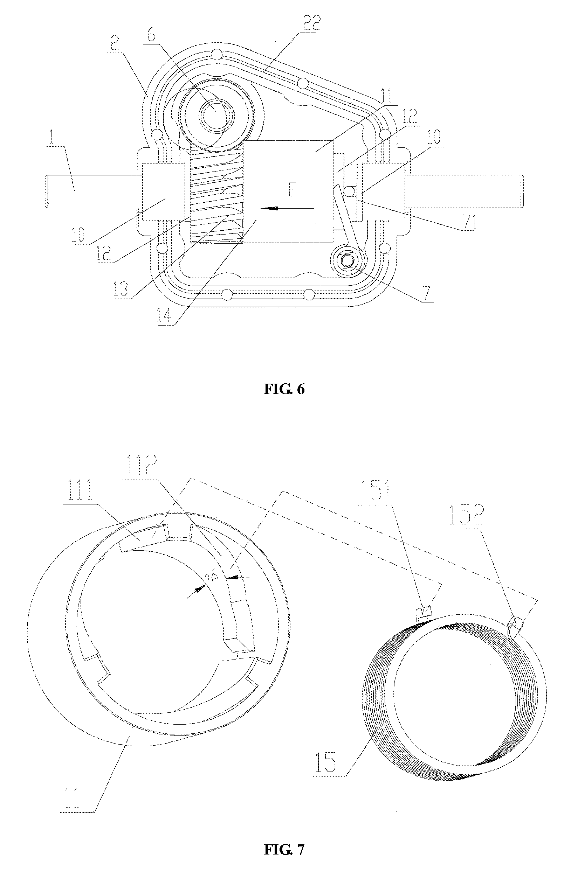

As shown in Fig. 1∼Fig. 7, the present invention comprises output shaft 1, gasket 12, worm 6, worm wheel 13, clutch release shaft 7, tension spring 3, clutch swing arm 5, sliding sleeve 11, shaft sleeve I 14, torsional spring 15, shaft sleeve II 16 and spring pin 17. Gasket 12, worm wheel 13, shaft sleeve I 14, torsional spring 15 and shaft sleeve II 16 are arranged on the output shaft 1 in turn. Bearing blocks 10 that are fixed on box 2 are respectively arranged at the external sides of gasket 12. Output shaft 1 is supported on box 2 through the bearing blocks 10 on its two sides, and gaskets 12 are respectively arranged between bearing block 10 and worm wheel 13 and between bearing block 10 and shaft sleeve II 16 in order to play a stopping role to the frequent axial movement of sliding sleeve 11.

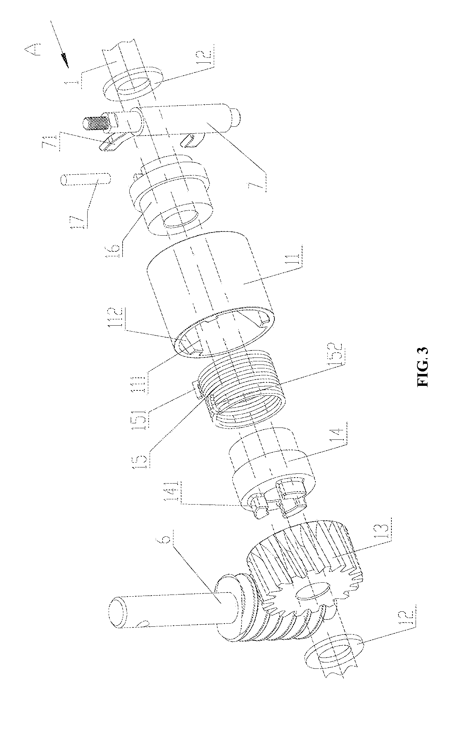

As shown in Fig. 3 and Fig. 7, torsional spring 15 is arranged inside sliding sleeve 11, its two ends are arranged on the shaft heads at the opposite ends of shaft sleeve I 14 and shaft sleeve II 16, and it is positioned with a shaft shoulder. Straight claw 151 and curved claw 152 are arranged at the two ends of torsional spring 15, a rib-type spiral wedge is arranged at the inner hole of sliding sleeve 11, one side of the spiral wedge is an axial plane 111, the other side is a helicoid 112. As shown by the broken lines in Fig. 7, straight claw 151 of torsional spring 15 rests against the axial plane 111 on one side of the spiral wedge at the inner hole of sliding sleeve 11, curved claw 152 of torsional spring 15 rests against helicoid 112 on the other side of the spiral wedge at the inner hole of sliding sleeve 11, and the lead angle α of the rib-type spiral wedge is 40°∼55°. In order to reduce the contact area between the curved claw surface and helicoid 112 and reduce their wear and tear, one end of torsional spring 15 adopts the structure of curved claw 152.

As shown in Fig. 1, Fig. 2 and Fig. 3, the upper end of worm 6 is fixed connected with the belt pulley 4 via pin 9, belt pulley 4 transfers the power of the engine to worm 6, worm 6 is engaged with worm wheel 13, shaft sleeve I 14 is radially fixed connected with worm wheel 13 via three convex teeth 141 which are evenly distributed on end face, and shaft sleeve II 16 is fixed connected with output shaft 1 via spring pin 17. Clutch release shaft 7 is vertically arranged along shaft sleeve II 16, its radially extending shifting fork 71 rests against one end of shaft sleeve II 16, the upper end of clutch release shaft 7 runs out of the upside of the upper part 21 of box 2 and then is fixed connected with clutch swing arm 5 via nut 8, one end 31 of tension spring 3 is hook jointed to the fixing end 211 of the upper part 21, the other end 32 is hook jointed to an end hole of clutch swing arm 5, and the other end of clutch swing arm 5 is hinged to the pull bar of the clutch operational mechanism (not shown in Fig. 3). As clutch swing arm 5 is a lever structure with its power arm being longer than its resisting arm, as long as a very small force is applied onto the pull bar of the clutch operational mechanism, a large rotating torque to clutch release shaft 7 will be generated, so the operation is labor saving.

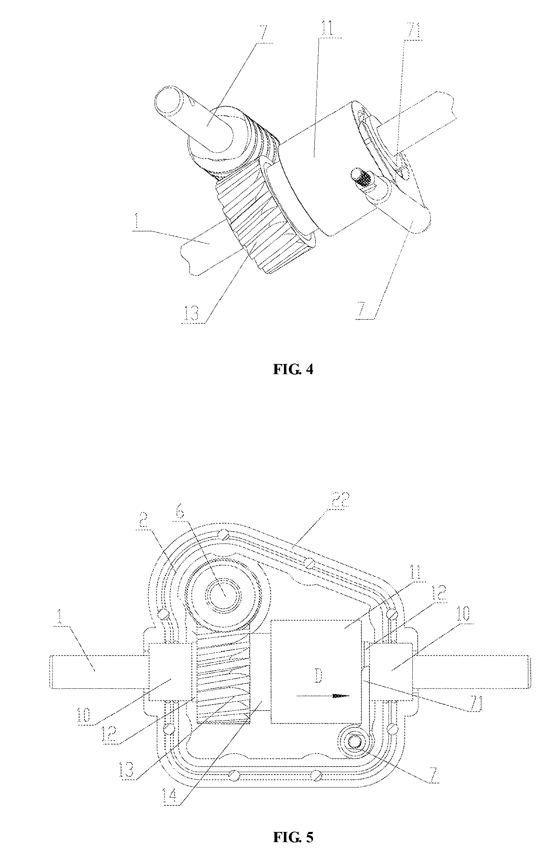

As shown in Fig. 2 and Fig. 5, an external force pulls the pull bar of the clutch operational mechanism in a direction shown by Arrow C in Fig. 2. As a result, clutch swing arm 5 rotates clockwise around the center of clutch release shaft 7, tension spring 3 is stretched, clutch release shaft 7 fixed connected with clutch swing arm 5 also rotates clockwise, shifting fork 71 turns to the external wall of box 2, the right end of sliding sleeve 11 is set free, under the resilience force of torsional spring 15, an axial force is generated at the contacting area between curved claw 152 and helicoid 112 of the spiral wedge at the inner hole of sliding sleeve 11 to push sliding sleeve 11 to move along the direction of Arrow D in Fig. 5 until its position is limited by shifting fork 71. As torsional spring 15 clasps the excircles of shaft sleeve I 14 and shaft sleeve II 16 at its two ends after resilience, the present invention is in an engaged state, the power of the engine is transferred to worm 6 through belt pulley 4 and drives the engaged worm wheel 13 to rotate, worm wheel 13 drives shaft sleeve I 14 to rotate through the shaft sleeve I 14 radially connected to it and then drives shaft sleeve II 16 to rotate through torsional spring 15 and sliding sleeve 11, shaft sleeve II 16 drives output shaft 1 connected to it to rotate, and the lawn mower realizes self-propelling.

As shown in Fig. 6, after the external force that pulls the pull bar of the clutch operational mechanism disappears, under the elastic force of tension spring 3, clutch swing arm 5 will rotate anticlockwise around the center of clutch release shaft 7, clutch release shaft 7 will also rotate anticlockwise and shifting fork 71 will push sliding sleeve 11 to move leftward along the direction of Arrow E in FIG. 6. Under the push of helicoid 112 of the spiral wedge at the inner hole of sliding sleeve 11, the angle between curved claw 152 and straight claw 151 of torsional spring 15 will be opened, torsional spring 15 will release the originally clasped excircles of shaft sleeve I 14 and shaft sleeve II 16, the present invention will be in a disengaged state, worm wheel 13 will drive shaft sleeve I 14 to rotate around output shaft 1, sliding sleeve 11, shaft sleeve II 16 and output shaft 1 which is fixed connected with the shaft sleeve II 16 won't rotate, and the lawn mower will stop self-propelling.

In addition to the foregoing embodiments, the present invention may also have other embodiments. All technical schemes formed through identical replacement or equivalent conversions shall fall within the protection scope of the present invention.

## Claims

1. A clutch for gearbox output shaft of lawn mower, wherein it comprises output shaft, gasket, worm, worm wheel, clutch release shaft, tension spring, clutch swing arm, sliding sleeve, shaft sleeve I , torsional spring, shaft sleeve II and spring pin; the gasket, worm wheel, shaft sleeve I , torsional spring and shaft sleeve II are arranged on the output shaft in turn, the torsional spring is arranged inside the sliding sleeve and its two ends are respectively arranged on the shaft sleeve I and the shaft sleeve II; the worm engages the worm wheel, the shaft sleeve I is radially fixed connected with the worm wheel, the shaft sleeve II is fixed connected with the output shaft via a spring pin, the clutch release shaft is vertically arranged along the shaft sleeve II, its radially extending shifting fork rests against one end of the shaft sleeve II, the upper end of said clutch release shaft runs out of the upside of the box and then is fixed connected with the clutch swing arm, the two ends of the tension spring are respectively hook jointed to the upside of the box and one end of the clutch swing arm, and the other end of the clutch swing arm is hinged to the clutch operational mechanism.

2. A clutch for gearbox output shaft of lawn mower as claimed in claim 1, wherein a rib-type spiral wedge is arranged at the inner hole of the sliding sleeve, one side of the spiral wedge is an axial plane and the other side is a helicoid.

3. A clutch for gearbox output shaft of lawn mower as claimed in claim 2, wherein the lead angle of the rib-type spiral wedge is 40°∼55°.

4. A clutch for gearbox output shaft of lawn mower as claimed in claim 1, wherein a straight claw and a curved claw are arranged at the two ends of the torsional spring, the straight claw rests against the axial plane on one side of the spiral wedge at the inner hole of the sliding sleeve, and the curved claw rests against the helicoid on the other side.

5. A clutch for gearbox output shaft of lawn mower as claimed in claim 1, wherein the shaft sleeve I and the shaft sleeve II adopt a structure of stepped shaft sleeve, and the two ends of the torsional spring are respectively arranged on the two opposite ends of the shaft sleeve I and the shaft sleeve II.
